# EUROPÄISCHE PATENTSCHRIFT

(11) **EP 3 857 390 B1**
(45) Veröffentlichungstag und Bekanntmachung des Hinweises auf die Patenterteilung: **02.09.2026**
(21) Anmeldenummer: 19744651.1
(22) Anmeldetag: 18.07.2019
(51) Int. Cl.: G06F 13/12

(54) **DATENVERARBEITUNGSVORRICHTUNG MIT MEHREREN PROZESSOREN UND MEHREREN SCHNITTSTELLEN**
DATA PROCESSING APPARATUS HAVING MULTIPLE PROCESSORS AND MULTIPLE INTERFACES
DISPOSITIF DE TRAITEMENT DE DONNÉES COMPRENANT UNE PLURALITÉ DE PROCESSEURS ET UNE PLURALITÉ D'INTERFACES

(30) Priorität: 28.09.2018 DE 102018124106
(43) Veröffentlichungstag der Anmeldung: 04.08.2021
(73) Patentinhaber: Rockwell Collins Deutschland GmbH, 69123 Heidelberg (DE)
(72) Erfinder: REUBOLD, Timo, 69412 Eberbach (DE)
(74) Vertreter: Müller Hoffmann & Partner
(86) Internationale Anmeldenummer: PCT/EP2019/069362
(87) Internationale Veröffentlichungsnummer: WO 2020/064168

(56) Entgegenhaltungen:
- EP-A1- 3 098 718
- US-A1- 2006 123 071
- US-B1- 9 137 038

## Beschreibung

Die Erfindung betrifft eine Datenverarbeitungsvorrichtung mit mehreren Prozessoreinrichtungen und mehreren Schnittstelleneinrichtungen, insbesondere eine Datenverarbeitungsvorrichtung zur Verwendung in der Avionik.

Avionik bezeichnet üblicherweise die Gesamtheit der elektrischen und elektronischen Geräte, die an Bord eines Luftfahrzeugs verwendet werden. Der Entwicklung moderner Mikroelektronik folgend, schreitet auch die Integration von immer mehr Funktionalität in kleinere, leistungsfähigere und effizientere Avionik-Rechner-Systeme zunehmend voran. Das Besondere bei Avionik-Rechner-Systemen ist, dass sie in der Regel langwierigen und aufwendigen Zulassungsverfahren unterzogen werden müssen. Nur mit bestandener Zulassung können entsprechende Komponenten in der Luftfahrt, z.B. in Flugzeugen oder Avionikgeräten, eingesetzt werden. Dies führt dazu, dass Veränderungen in den Komponenten nur sehr langsam und zögerlich vorgenommen werden können.

Bei in der Avionik üblichen Rechner-Systemen werden meist Prozessoren bereitgestellt, auf denen einzelne Anwendungen laufen können. Die Prozessoren sind mit Schnittstellen gekoppelt, die ihrerseits wieder mit anderen Geräten, zum Beispiel Messgeräten oder Sensoren gekoppelt sein können.

Aufgrund der oben erwähnten aufwendigen Zulassungsverfahren kann es in der Praxis dazu kommen, dass insbesondere die Schnittstellen hinsichtlich ihres Aufbaus oder hinsichtlich ihrer Definitionen über Jahrzehnte unverändert genutzt werden müssen. Jede Veränderung einer Schnittstelle oder gar eine Neudefinition einer Schnittstelle wäre enorm aufwendig und wird daher nur dann sinnvoll sein, wenn der Nutzen den hohen Aufwand überwiegt.

Auf bestehenden Flugplattformen werden häufig im Zuge von Modernisierungsprogrammen mehrere bestehende Subsysteme durch einzelne hochintegrierte Geräte ersetzt. Die bestehende Funktionalität kann dabei mit zusätzlichen Fähigkeiten erweitert werden.

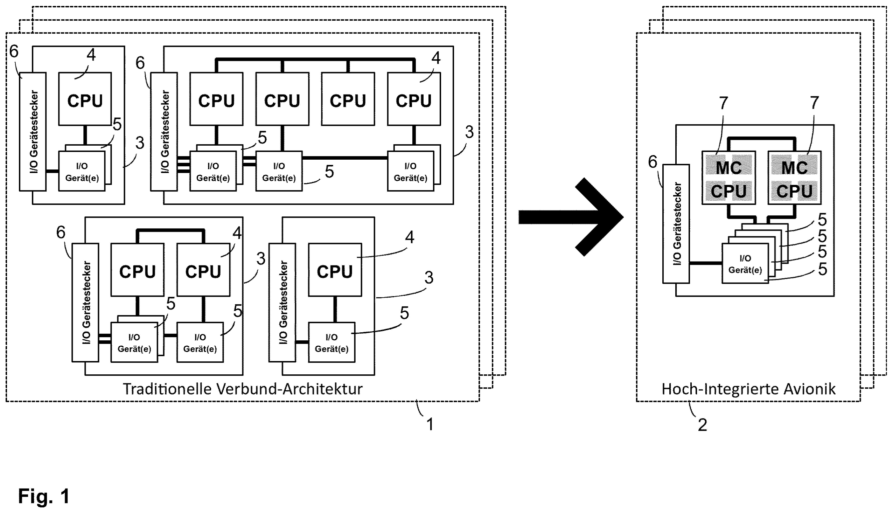

Fig. 1 zeigt schematisch die typische Entwicklung bei Avioniksystemen. Im linken Bildteil ist eine traditionelle Verbund-Architektur 1 dargestellt, die im Zuge der Modernisierung zu einer hochintegrierten Avionik 2 weiterentwickelt werden soll.

Die traditionelle Verbund-Architektur 1 zeichnet sich dadurch aus, dass eine Vielzahl von einzelnen Rechner-Systemen 3 vorhanden ist, wobei jedes Rechner-System 3 einen oder mehrere Prozessoren 4 sowie mit den Prozessoren 4 verbundene Schnittstellen 5 aufweist. Die Schnittstellen 5 können ihrerseits wieder mit geeigneten Verbindern 6, zum Beispiel Gerätesteckern oder -buchsen gekoppelt sein, um die externen Geräte anschließen zu können.

Im Zuge der Modernisierung sollen derartige komplexe und vielfältige Systeme weiter integriert werden, wie im rechten Bildteil von Fig. 1 dargestellt. Hierbei wird angestrebt, moderne Mehrkernprozessoren 7 in der Avionik auch für sicherheitskritische Anwendungen uneingeschränkt nutzbar zu machen.

Im Ergebnis entsteht eine hochparallele Rechnerarchitektur, auf der eine Vielzahl verschiedenster Applikationen (Software) in mehreren Kontexten gleichzeitig zur Ausführung gebracht werden können. Die Applikationen bzw. die Kontexte sollen sich dabei eine definierte Menge physischer Ressourcen (Hardware) teilen. Zu diesen physischen Ressourcen gehören insbesondere auch üblicherweise eine Vielzahl von Eingabe- und Ausgabeschnittstellen (I/O-Schnittstellen) des Rechner-Subsystems.

Ein Problem dabei ist es, eine möglichst flexible I/O-Architektur zu erreichen, mit der die Integration (langjährig) etablierter, sowie aber auch neuer oder gar zukünftiger Schnittstellen-Standards ermöglicht werden kann. Dies sollte möglichst vereinheitlicht und für ein zertifiziertes Mehrkern-Rechner-Subsystem effizient nutzbar gemacht werden.

In der Avionik besteht bei bekannten Systemen eine feste Zuordnung von physikalischen Schnittstellen zu einer einzelnen Software-Applikation, einem Prozessorkern bzw. einem Prozessor. Das schränkt die Skalierbarkeit und Flexibilität bestehender Subsysteme stark ein. Wenn mehr als eine Schnittstelle eines bestimmten Typs mittels zum Beispiel einer anwendungsspezifischen integrierten Schaltung (IC) implementiert werden soll, erfolgt eine Zuordnung der integrierten Schaltung und der damit verbundenen Funktionalität mit einem einzelnen Prozessorkern sowie dem zugehörigen Treiber- und Applikationssoftware-Kontext. Eine gewisse Flexibilität kann dabei mit Hilfe einer I/O-Server-Software erreicht werden. Dabei werden aber vor allem in Hinsicht auf die komplexen Austauschbeziehungen zwischen additiver Latenz, hoher Komplexität der Ablaufplanung, multiplen Daten-Kopiervorgängen sowie dem Rechenzeit-Bedarf keine zufriedenstellenden Lösungen erreicht. Diese Ansätze sind somit häufig sehr komplex oder sehr latenzbehaftet.

Der Datenaustausch zwischen den Schnittstellen (I/O-Hardware) und den Softwareschichten erfolgt üblicherweise dadurch, dass die jeweilige Softwareanwendung Daten anfragt. In der Folge dieser Anfrage werden Daten entweder direkt über Peripherie-Schnittstellen (zum Beispiel PCI-Express) aus Speichern entnommen, die den Schnittstellen zugeordnet sind, oder in dem jeweiligen Speicher zum Versand bereitgestellt.

Häufig wird auch eine weitere dedizierte Hardware verwendet, um den Datentransport zwischen der Peripherie und dem Hauptspeicher zu organisieren und auf diese Weise die Software-Anwendung zu entlasten (zum Beispiel mit Hilfe eines Prozessor-DMA-Controllers).

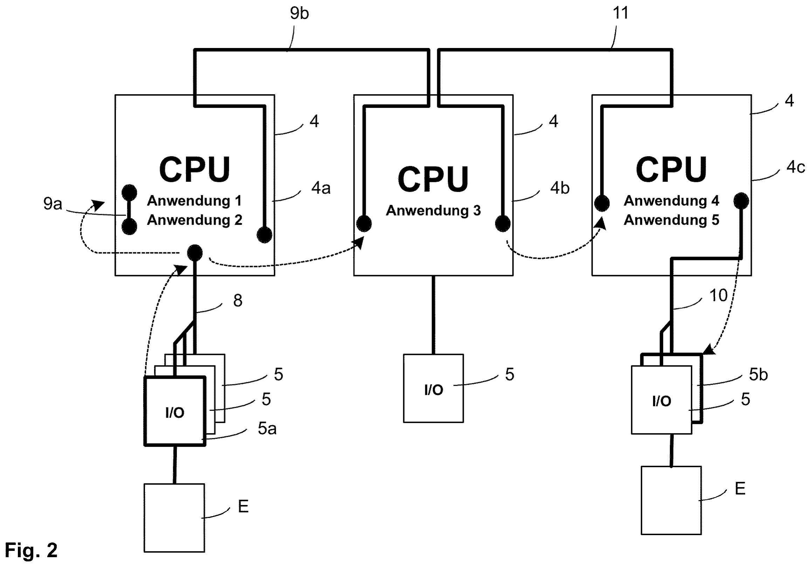

Fig. 2 zeigt ein abstraktes Beispiel für eine typische bekannte Realisierung eines Rechner-Systems in der Avionik mit mehreren Schnittstellen, die von Anwendungen (Softwareapplikationen) auf mehreren Prozessoren gemeinsam genutzt werden.

Im vorliegenden Beispiel sind drei Prozessoren 4 dargestellt, auf denen insgesamt fünf verschiedene Anwendungen laufen. Zur besseren Unterscheidbarkeit sind die Prozessoren mit den Bezugszeichen 4a, 4b und 4c gekennzeichnet. Die hier zur Erläuterung näher beschriebenen Schnittstellen 5 sind mit den Bezugszeichen 5a und 5b gekennzeichnet.

Die Schnittstellen 5 bzw. 5a, 5b sind mit nicht dargestellten externen Einrichtungen E koppelbar, zum Beispiel anderen Geräten, Sensoren, Relais, Ventilen, Elektromotoren etc.

In dem vorliegenden Beispiel werden Daten von der externen Einrichtung E über die Schnittstelle 5a zugeführt und von dort über eine Verbindung 8 an den Prozessor 4a übergeben. Insbesondere erfolgt der Datenfluss von der Schnittstelle 5a zu der Anwendung 2, die auf dem Prozessor 4a läuft. Die Anwendung 2 kontrolliert die Schnittstelle 5a und damit auch den Datenfluss.

Weiterhin teilt die Anwendung 2 die eingehenden Daten mit der ebenfalls auf dem Prozessor 4a laufenden Anwendung 1 sowie der Anwendung 3, die auf einem anderen Prozessor, nämlich dem Prozessor 4b läuft.

Die dabei entstehenden Datenflüsse sind durch Verbindungen 9a (zwischen Anwendung 2 und Anwendung 1) sowie 9b (zwischen Anwendung 2 und Anwendung 3) gekennzeichnet.

Mit den Datenflüssen sind jeweils auch Latenzen verbunden, die unterschiedliche Zeiträume umfassen können. Das Lesen von Daten von der Schnittstelle 5a durch die Anwendung 2 liegt typischerweise bei unter 1 ms. Dies gilt auch für das Kopieren der Daten von der Anwendung 2 zur Anwendung 1 über die Verbindung 9a innerhalb des Prozessors 4a.

Das Kopieren hingegen von dem Prozessor 4a zu dem Prozessor 4b, nämlich von der Anwendung 2 zur Anwendung 3 kann sehr viel zeitaufwendiger sein und typischerweise weniger als 40 ms betragen.

Ein anderer Datenfluss ist im rechten Bildteil von Fig. 2 dargestellt. Hier sollen Daten über die Schnittstelle 5b an eine externe Einrichtung E ausgegeben werden. Die Schnittstelle 5b wird über eine Verbindung 10 durch die Anwendung 4 kontrolliert. Da über die Schnittstelle 5b Daten der Anwendung 3 ausgegeben werden sollen, macht die Anwendung 4 auf dem Prozessor 4c die Schnittstelle 5b für die Anwendung 3 auf dem anderen Prozessor 4b zum Senden von Daten verfügbar. Hierzu besteht eine weitere Verbindung 11 zwischen der Anwendung 3 und der Anwendung 4.

Bei diesem Vorgang müssen somit erneut Daten zwischen zwei Prozessoren (hier Prozessoren 4b und 4c) kopiert werden, was zu Latenzzeiten von < 40 ms führen kann. Das Schreiben durch die Anwendung 4 (Software) in die Schnittstelle 5b liegt typischerweise bei < 1 ms.

Die hier genannten typischen Latenzzeiten können insbesondere durch den Software-Datentransfer, Kopiervorgänge und eine asynchrone Software-Ablaufplanung zwischen einzelnen Prozessoren entstehen. Die Latenzzeiten bzw. die ihnen zugrunde liegenden Vorgänge sind in Fig. 2 auch durch gestrichelte Pfeile gekennzeichnet.

In der US 2006/0123071 A1 wird eine Vorrichtung zum Verarbeiten von Signalen beschrieben, die von Sensoren in einem Antriebsstrang eines Fahrzeugs bereitgestellt werden.

Aus der US 9,137,038 B1 ist ein Avionik-Rechnersystem bekannt, mit einer auf mehrere Prozessoren verteilten Datenverarbeitung, wobei die Prozessoren über einen Datenbus miteinander verbunden sind.

Die EP 3 098 718 A1 beschreibt allgemein eine Virtualisierungsplattform, mit einem Host-Prozessor und einem damit gekoppelten Beschleunigungs-Prozessor.

Der Erfindung liegt die Aufgabe zugrunde, eine somit beschriebene Avionik-Datenverarbeitungsvorrichtung einerseits hinsichtlich ihrer Flexibilität und andererseits der Datenflussgeschwindigkeiten bzw. einer Verringerung der Latenzzeiten zu verbessern.

Die Aufgabe wird erfindungsgemäß gelöst durch ein Avionik-Rechnersystem mit einer Datenverarbeitungsvorrichtung mit den Merkmalen von Anspruch 1. Vorteilhafte Ausgestaltungen sind in den abhängigen Ansprüchen angegeben. Die erfindungsgemäße Datenverarbeitungsvorrichtung kann dementsprechend insbesondere vorteilhaft in Avionik-Rechnersystemen eingesetzt werden.

Es wird ein Avionik-Rechnersystem mit einer Datenverarbeitungsvorrichtung angegeben, mit mehreren Prozessoren, mehreren Schnittstellen, an die jeweils externe Einrichtungen anschließbar sind, und mit Verbindungen zwischen den Schnittstellen und den Prozessoren, über die Daten zwischen den Schnittstellen und den Prozessoren transportierbar sind, wobei in den Verbindungen wenigstens eine Datenverwaltungseinrichtung vorgesehen ist, zum Handhaben von Datenflüssen zwischen den Schnittstellen und den Prozessoren.

Bei der Datenverarbeitungsvorrichtung wird somit im Unterschied zu bekannten Datenverarbeitungsvorrichtungen in den Verbindungen zwischen den Schnittstellen und den Prozessoren zusätzlich eine Datenverwaltungseinrichtung vorgesehen, die die Datenflüsse handhaben soll. Dadurch werden insbesondere die Prozessoren und die darauf laufenden Software-Anwendungen von Datenhandhabungsaufgaben entlastet und die Effizienz gesteigert.

Die genannten externen Einrichtungen sind typischerweise Geräte, Sensoren, Motoren, Ventile, Schalter, Lichtelemente, Klimatisierungskomponenten etc., die z.B. in der Luftfahrt zum Einsatz kommen und die an die Schnittstellen anschließbar sind. Diese externen Einrichtungen sind somit nicht Teil der angegebenen Datenverarbeitungsvorrichtung. Vielmehr verläuft die Systemgrenze der beschriebenen Datenverarbeitungsvorrichtung derart, dass die anschließbaren externen Einrichtungen davon nicht erfasst sind.

Bei den Prozessoren handelt es sich um Prozessoreinrichtungen, die in an sich bekannter Weise aufgebaut sein können und insbesondere einen oder mehrere Hauptprozessoren bzw. Prozessorkerne (CPU), Steuer- bzw. Leitwerke, Rechenwerke, Register, Datenleitungen (Datenbusse), Caches und eine Speicherverwaltung (Memory Management Unit - MMU) aufweisen können. Der Begriff "Prozessor" umfasst somit nicht alleine den eigentlichen Prozessor, sondern selbstverständlich auch mit dem Prozessor gekoppelte Speicherbereiche (zum Beispiel den Hauptspeicher), die für den Betrieb des Prozessors erforderlich sind.

Bei den Schnittstellen kann es sich um in vielfältiger Weise ausgestaltete Schnittstelleneinrichtungen handeln, die insbesondere als Hardware-Schnittstellen ausgebildet sind, um in der Luftfahrt vorgesehene Geräte mit einem oder mehreren Prozessoren zu koppeln. Entsprechend können sie z.B. als analoge oder digitale, parallele oder serielle Schnittstellen etc. ausgestaltet sein.

Die Schnittstellen können dementsprechend verschiedene unterschiedliche Schnittstellentypen umfassen, zum Beispiel diskrete Schnittstellen (28 V/GNDopen, 12 V, 5 V, TTL, PWM), analoge Schnittstellen (Strom, Spannung, Frequenz), serielle Schnittstellen, digitale Schnittstellen, etc. Die Schnittstellen können auch mehrere traditionelle diskrete (Analog, Digital), serielle (ARINC-429, RS-422, etc.), Bus- (MIL-STD-1553, CAN, STANAG-3910, etc.) sowie moderne Netzwerk-Schnittstellen (Ethernet, AFDX, Fibre Channel, etc.) einschließen.

Die genannten Verbindungen können einerseits zwischen Prozessoren und Schnittstellen und andererseits aber auch direkt zwischen den Prozessoren bestehen.

Z.B. können - wie oben in Zusammenhang mit Fig. 1 erläutert - bei einem Avionik-Rechnersystem mehrere Prozessoreinrichtungen vorgesehen sein, in denen Mehrkernprozessoren betrieben werden, auf denen Softwareapplikationen laufen, die übergreifend auf die Schnittstellen zugreifen müssen.

Die Datenverwaltungseinrichtung wird somit separat und zusätzlich zu den Schnittstellen und Prozessoren vorgesehen. Dadurch ist es möglich, dass die Schnittstellen und Prozessoren baulich nicht verändert werden müssen, was entsprechende Zulassungsverfahren vereinfachen und beschleunigen kann.

Das Handhaben von Datenflüssen umfasst insbesondere das Durchführen der damit üblicherweise verbundenen Maßnahmen wie Managen, Sortieren, Weiterleiten von eingehenden und ausgehenden Daten.

Je nach Komplexität der Datenverarbeitungsvorrichtung können auch mehrere Datenverwaltungseinrichtungen genutzt werden, die jeweils den Schnittstellen zugeordnet sind und die die Datenflüsse von und zu den Schnittstellen handhaben.

Die Schnittstellen können ausgebildet sein zum Empfangen von Daten von externen Einrichtungen, die an die Schnittstellen anschließbar sind, und/oder zum Senden von Daten an externe Einrichtungen, die an die Schnittstellen anschließbar sind. Die Schnittstellen können somit in üblicher Weise das Empfangen und Senden von Daten durchführen.

Wenigstens eine der Schnittstellen kann somit zum Empfang von Daten von einer an die Schnittstelle anschließbaren externen Einrichtung und wenigstens eine der Schnittstellen kann zum Senden von Daten an eine an die Schnittstelle anschließbare externe Einrichtung ausgebildet sein.

Die Datenverwaltungseinrichtung kann als Hardwarekomponente ausgebildet sein. Das bedeutet, dass die Datenverwaltung nicht durch Software und somit insbesondere nicht unter Nutzung der auf den Prozessoren laufenden Anwendungen erfolgt, sondern dass die Datenverwaltungseinrichtung einen eigenen Hardwarebestandteil darstellt. Insbesondere kann die Datenverwaltungseinrichtung als integrierte Schaltung (IC) ausgebildet sein.

Die Hardwarekomponente bzw. die integrierte Schaltung kann modular und/ oder logisch getrennt von den Prozessoren und den Schnittstellen ausgebildet sein. Die Hardwarekomponente kann somit baulich getrennt von den Prozessoren und den Schnittstellen ausgebildet sein und ein eigenes Bauelement darstellen, so dass die Prozessoren und die Schnittstellen baulich nicht verändert werden müssen, wodurch die Zulassungsverfahren erleichtert werden. Ebenso ist es möglich, dass z. B. die Hardwarekomponente auf einem System-on-Chip realisiert wird, bei dem alle Komponenten auf einem einzelnen Chip zusammen integriert sind, wobei aber eine logische Trennung der Hardwarekomponente von den anderen Komponenten (Prozessoren, Schnittstellen) gegeben ist.

Die Hardwarekomponente kann mit wenigstens einem Teil der Schnittstellen direkt verbunden sein. Auf diese Weise ist ein schneller Datenaustausch möglich.

Die Prozessoren können Speicherbereiche aufweisen, zum Speichern von Daten, wobei die Datenverwaltungseinrichtung ausgebildet sein kann, um Datenflüsse zu Speicherbereichen der Prozessoren zu handhaben. Insbesondere können dabei physikalische Speicherbereiche für Anwendungen definiert werden, die auf den Prozessoren laufen. Diese Speicherbereiche liegen üblicherweise im Hauptspeicher, wobei die dort gespeicherten Daten durch die jeweiligen Anwendungen nutzbar sind. Die Speicherbereiche können zudem direkt von der Datenverwaltungseinrichtung angesteuert werden, ohne Nutzung der jeweiligen Anwendungen. Dadurch werden die Anwendungen entlastet und Latenzzeiten erheblich reduziert. Die Datenverwaltungseinrichtung kann somit direkt in die physikalischen Speicherbereiche Daten schreiben oder Daten daraus auslesen.

Die Nutzung des Hauptspeichers (also der Prozessor-RAM) ist dabei besonders vorteilhaft. Z.B. kann ein Speicher auch über eine Schnittstelle als externe Einrichtung physisch zugeordnet sein. Er ist dann aber vom Prozessor nur mittels dieser Peripherieschnittstelle erreichbar, wodurch erhebliche Latenzen bewirkt werden können. Der Hauptspeicher jedoch ist vom Prozessor aus schnell und latenzarm zugreifbar, was bei einem Speicher, der einem externen Gerät zugeordnet ist, nicht der Fall ist.

Wenigstens eine der Prozessoreinrichtungen kann einen oder mehrere Prozessorkerne aufweisen. Ebenso ist es möglich, dass ein Rechner-System wenigstens eine oder mehrere Prozessoreinrichtungen aufweist.

Die Datenverarbeitungsvorrichtung kann in besonders vorteilhafter Weise bei Avionik-Rechnersystemen eingesetzt werden.

Die Datenverwaltungseinrichtung in Form der integrierten Schaltung (Hardware) übernimmt das Sortieren und Weiterleiten von eingehenden und ausgehenden Daten auf mehreren zugeordneten Avionik-I/O-Schnittstellen verschiedenen Typs vollständig autonom. Dies geschieht weitestgehend ohne ständigen Steuerungsaufwand und Datentransport durch die in den Prozessoren laufende Software.

Die über die Schnittstellen empfangenen Empfangs-Daten werden durch die Datenverwaltungseinrichtung direkt im Prozessor-Hauptspeicher mehreren voneinander unabhängigen Software-Anwendungen verfügbar gemacht. Daten, die von der Software nach außen, zu externen Einrichtungen übergeben werden sollen, werden durch die Datenverwaltungseinrichtung aus dem Prozessor-Hauptspeicher abgeholt. Der Datentransfer zwischen einer Schnittstelle und einem Prozessor-Hauptspeicher geschieht dabei ohne aktive Beteiligung einer auf dem Prozessor laufenden Software-Anwendung.

Durch eine geeignete Speicher-Zugriffsverwaltung (Prozessor- und Betriebssystemkonfiguration) wird eine konfliktfreie und sichere gemeinsame Nutzung der Datenverwaltungseinrichtung (der integrierten Schaltung), der implementierten Schnittstellen sowie aller Empfangs- und Sende-Daten durch mehrere Software-Anwendungen zur gleichen Zeit ermöglicht. Die Software-Anwendungen können dabei auf einem oder mehreren Prozessorkernen bzw. auch auf einem oder mehreren Mehrkern-Prozessoren parallel ausgeführt werden.

Unabhängig vom Schnittstellentyp kann der gleiche generische Ansatz für einen robusten und synchronisierten Datenaustausch zwischen der Hardware (der Datenverwaltungseinrichtung) und der Software (den auf den Prozessoren laufenden Anwendungen) zur Anwendung kommen. Dabei können Datenstrukturen verwendet werden, die Industriestandard-kompatibel sind. Dies betrifft zum Beispiel bekannte Systeme wie PCI-Express oder Rapid-I/O. Die Datenstrukturen können Ringpuffer nutzen, in Verbindung mit einem geeigneten Synchronisationsmodell (Produzent, Konsument, Zeiger) und einem Kommunikationsmodell (paketbasierte Speichertransfers, direkter Speicherzugriff (DMA)).

Aufgrund der Verwendung von im Wesentlichen Industriestandard-kompatiblen Komponenten ist der Aufwand für Zulassungsverfahren als Teil einer sicherheitskritischen Avionik überschaubar, ohne dass dabei Flexibilität und Effizienz eingeschränkt sind.

Mit Hilfe der Datenverarbeitungsvorrichtung ist eine Vereinheitlichung des Mechanismus der Ein- und Ausgabe von Daten unabhängig vom Typ der genutzten Schnittstelle möglich. Aufgrund der hardwaremäßigen Entlastung der Software-Anwendungen ist eine Steigerung der Effizienz in der Software-Ausführung möglich. Die Entlastung der Software von Eingabe- und Ausgabetätigkeiten führt zu einer Reduzierung der Interferenz in der Software-Ausführung, was einen erleichterten Nachweis des für Zulassungsfragen wichtigen Determinismus führt.

Die Datenverarbeitungsvorrichtung stellt ein robustes Modell dar, mit dem verschiedene Schnittstellen gleichzeitig gemeinsam durch verschiedene Anwendungen ohne additive Latenz genutzt werden können.

Die Vorrichtung ermöglicht eine sehr gute Skalierbarkeit von traditionellen Systemen mit einzelnen Prozessoren bis hin zu modernen Systemen mit einem oder mehreren Mehrkernprozessoren.

Diese und weitere Vorteile und Merkmale werden nachfolgend anhand eines Beispiels unter Zuhilfenahme der begleitenden Figuren erläutert. Es zeigen:
- **Fig. 1**: ein schematisches Beispiel für die Konsolidierung älterer Rechnersysteme auf neue Rechnerarchitekturen;
- **Fig. 2**: den prinzipiellen Aufbau einer Datenverarbeitungsvorrichtung nach dem Stand der Technik;
- **Fig. 3**: eine schematische Darstellung einer erfindungsgemäßen Datenverarbeitungsvorrichtung; und
- **Fig. 4**: eine Detaildarstellung der Speicherverwaltung.

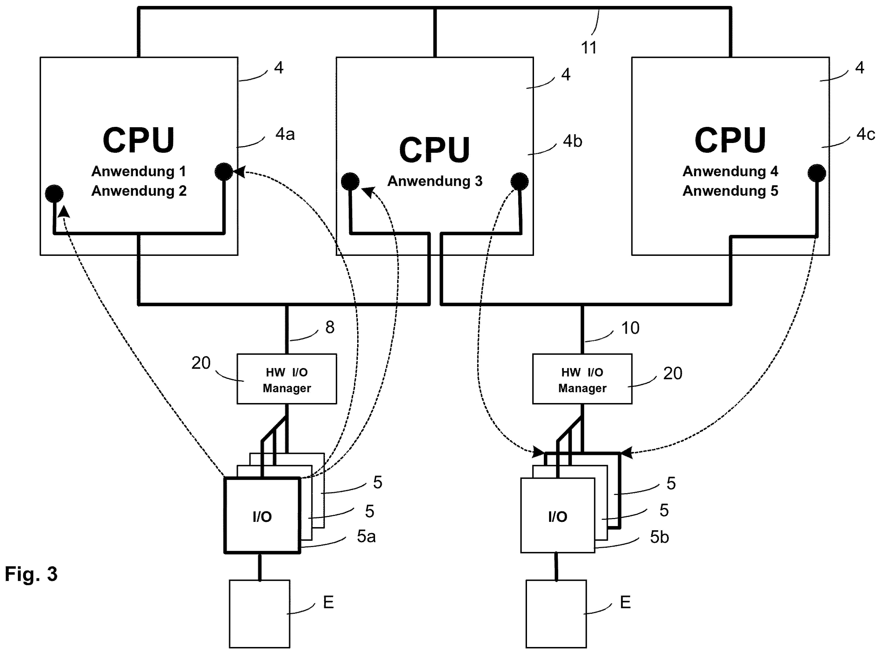

Fig. 3 zeigt den schematischen Aufbau einer erfindungsgemäßen Datenverarbeitungsvorrichtung, die z.B. Teil eines Rechner-Systems sein kann. Komponenten, die den bereits oben im Zusammenhang mit Fig. 2 zum Stand der Technik beschriebenen Komponenten ähneln oder mit diesen identisch sein können, werden mit gleichen Bezugszeichen gekennzeichnet.

So ist ersichtlich, dass bei der erfindungsgemäßen Datenverarbeitungsvorrichtung von Fig. 3 im Unterschied zu der Datenverarbeitungsvorrichtung von Fig. 2 wenigstens eine zusätzliche Datenverwaltungseinrichtung 20 in der Verbindung 8 zwischen den Schnittstellen 5 und den Prozessoren 4 vorgesehen ist. In dem in Fig. 3 gezeigten Beispiel sind zwei Datenverwaltungseinrichtungen 20 (HW I/O Manager - Hardware) eingesetzt. Andere Varianten können auch mit nur einer Datenverwaltungseinrichtung 20 oder mit mehreren Datenverwaltungseinrichtungen 20 ausgestattet sein.

Die Datenverwaltungseinrichtung 20 handhabt den Datenfluss zwischen den verschiedenen Schnittstelleneinrichtungen 5 und den Anwendungen, die auf den Prozessoren 4 laufen. Insbesondere ist die Datenverwaltungseinrichtung 20 hardwaremäßig realisiert, z.B. in Form einer integrierten Schaltung (HW I/O Manager).

Die Datenverwaltungseinrichtung 20 übernimmt die Schnittstellenverwaltung sowie den Datentransport, wodurch deutlich niedrigere Latenzzeiten möglich sind, wie später noch erläutert wird. Die deutlich niedrigeren Latenzzeiten beruhen hauptsächlich auf der Virtualisierung der Schnittstellen durch die Datenverwaltungseinrichtung, der direkten gemeinsamen Nutzung eines später noch erläuterten Prozessor-Hauptspeichers, sowie dem autonomen Sortieren und Weiterleiten von eingehenden und ausgehenden Daten durch die Datenverwaltungseinrichtung 20.

In dem in Fig. 3 gezeigten konkreten Beispiel empfängt die Datenverwaltungseinrichtung 20 Daten von der Schnittstelle 5a, die ihrerseits mit einer externen Einrichtung E verbunden ist, und schreibt sie direkt in die Hauptspeicherbereiche, die in dem Prozessor 4a durch die Anwendungen 1 und 2 genutzt werden. Im Unterschied zu dem aus dem Stand der Technik bekannten Beispiel von Fig. 2 ist es somit nicht erforderlich, dass - wie dort - eine Anwendung (in Fig. 2: Anwendung 2) Daten empfängt und für die Nutzung durch eine andere Anwendung (in Fig. 2: Anwendung 1) kopieren muss. Vielmehr erledigt die Datenverwaltungseinrichtung 20 das Zurverfügungstellen der Daten für beide Anwendungen 1 und 2 gleichzeitig.

Zudem werden die über die Schnittstelle 5a empfangenen Daten auch direkt in den Hauptspeicherbereich der Anwendung 3 geschrieben, so dass auch dort aufwendige Kopiervorgänge (in Fig. 2 Kopieren der Daten von Anwendung 2 zu Anwendung 3) entfallen.

Zu diesem Zweck sind feste physikalische Verbindungen, insbesondere für die Datenverwaltungseinrichtung 20 zu den jeweiligen Speicherbereichen definiert, die idealerweise im Betrieb auch unveränderlich bleiben. Die Datenverwaltungseinrichtung 20 "weiß" somit genau, in welche Speicherbereiche der Prozessoren 4 welche Daten geschrieben werden müssen.

Die Datenflüsse erfolgen somit über die Verbindung 8 zwischen der (Empfangs-)Schnittstelle 5a und den Speicherbereichen der Anwendungen 1 und 2 für den Prozessor 4a und dem Speicherbereich der Anwendung 3 auf dem Prozessor 4b.

Für die Schreibvorgänge durch die Datenverwaltungseinrichtung 20 ergeben sich extrem kurze Latenzzeiten. Diese liegen typischerweise unter 5 µs. Zum Vergleich: bei den Lese- und Kopiervorgängen der Vorrichtung von Fig. 2 waren erheblich längere Latenzzeiten im Bereich von Millisekunden erforderlich. Die Latenzzeiten bzw. die ihnen zugrunde liegenden Vorgänge sind in Fig. 3 auch durch gestrichelte Pfeile gekennzeichnet.

Im rechten Bildteil von Fig. 3 ist ein Beispiel für das Senden von Daten aus den Anwendungen 3 und 4 erläutert. Hier greift die (in Fig. 3 im rechten Bildteil dargestellte) Datenverwaltungseinrichtung 20 direkt auf die Speicherbereiche der Anwendungen 3 und 4 zu und übergibt die dort gelesenen Daten direkt an die Schnittstelle 5b.

Der Datenfluss erfolgt somit über die Verbindung 10 von der Anwendung 3 im Prozessor 4b und der Anwendung 4 im Prozessor 4c über die Datenverwaltungseinrichtung 20 zu der (Sende-)Schnittstelle 5b.

Auch hier sind die anfallenden Latenzzeiten sehr kurz und liegen typischerweise unter 10 µs.

Darüber hinaus können die Prozessoren 4 untereinander über Verbindungen 11 in üblicher Weise verbunden sein.

Die in Fig. 3 gezeigten Prozessoren 4 können jeweils einen Prozessorkern ("CPU") sowie die zugehörige Speicherhierarchie und Speicherverwaltung aufweisen. Wenn die Prozessoren 4 Teil von Mehrkernprozessoren sind (vgl. z. B. die Mehrkernprozessoren 7 in Fig. 1), ist es auch möglich, dass sich die Prozessorkerne (CPU) die Speicherverwaltung mit anderen Prozessorkernen (CPU) teilen, die Teil des betreffenden Mehrkernprozessors sind. In diesem Zusammenhang sei mit Bezug auf Fig. 1 ergänzt, dass für die dort beispielhaft gezeigten Mehrkernprozessoren 7 jeweils vier Prozessorkerne (entsprechend "CPU" in Fig. 3) dargestellt sind. Selbstverständlich können die Mehrkernprozessoren 7 auch anders aufgebaut sein.

Dementsprechend können bei dem Beispiel von Fig. 3 z.B. die Prozessoren 4a und 4b Teil eines ersten Mehrkernprozessors und der Prozessor 4c Teil eines anderen Mehrkernprozessors sein.

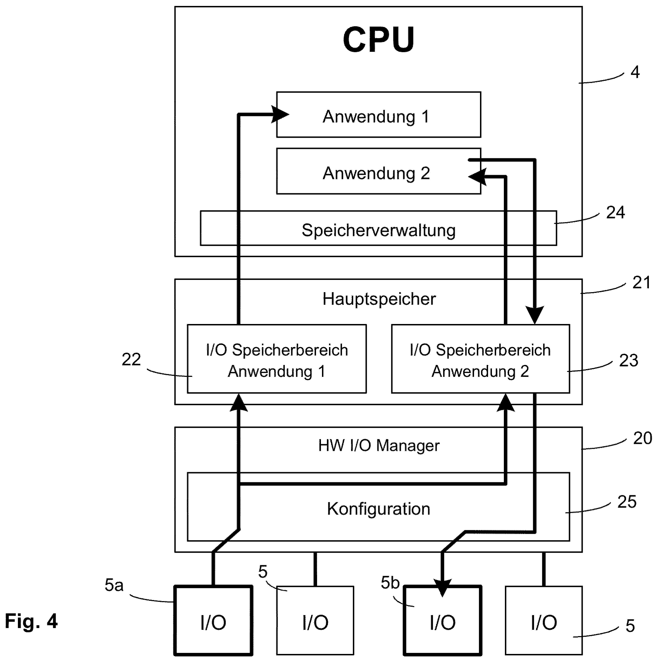

Fig. 4 zeigt in größerem Detail ein Beispiel für eine andere Anwendung, um die Datenflüsse und Speicherzugriffe besser erläutern zu können.

Hierbei ist die Darstellung des eigentlichen Haupt-Prozessors 4 getrennt von einem dem Prozessor 4 zugeordneten Hauptspeicher 21. Bei den Darstellungen in den Fig. 2 und 3 wurde der jeweilige Hauptspeicher nicht separat dargestellt, sondern als Teil des Prozessors 4 (korrekter: Prozessoreinrichtung, bestehend aus den eigentlichen Prozessoren sowie erforderlichen weiteren Komponenten wie zum Beispiel Speicherbereichen etc.) dargestellt.

In dem Prozessor 4 laufen die Anwendungen 1 und 2, denen jeweils Speicherbereiche 22 (für Anwendung 1) und 23 (für Anwendung 2) zugeordnet sind. Die Verwaltung der Speicherbereiche 22, 23 erfolgt in bekannter Weise durch eine Speicherverwaltung 24.

Die Datenverwaltungseinrichtung 20 (HW I/O Manager) weist eine geeignete Konfiguration 25 auf, die es ihr ermöglicht, die jeweils definiert zugeordneten Schnittstellen 5 bzw. 5a, 5b und die damit verbundenen Datenflüsse zu handhaben. Insbesondere "weiß" die Datenverwaltungseinrichtung 20, welche Daten von welcher Schnittstelle 5 in welche Speicherbereiche 22, 23 im Hauptspeicher 21 geschrieben werden müssen bzw. von dort ausgelesen und gesendet werden müssen.

Im in Fig. 4 gezeigten Beispiel werden die Empfangsdaten über die (Empfangs-)Schnittstelle 5a durch die Datenverwaltungseinrichtung 20 in die Speicherbereiche 22 (für Anwendung 1) und 23 (für Anwendung 2) geschrieben, wie auch bereits anhand von Fig. 3 erläutert. Die Anwendungen 1 und 2 haben ihrerseits direkten Zugriff auf die Speicherbereiche 22 und 23.

Auszugebende Daten werden in dem gezeigten Beispiel von der Anwendung 2 in den Speicherbereich 23 geschrieben und von dort durch die Datenverwaltungseinrichtung 20 ausgelesen und zu der Schnittstelle 5b geführt.

Fig. 4 zeigt lediglich den Aufbau eines stark vereinfachten Systems. Bei komplexeren Systemen ist es z.B. möglich, dass sich mehrere Prozessorkerne ("CPU") eine gemeinsame Speicherverwaltung und einen gemeinsamen Hauptspeicher teilen (z.B. bei Mehrkernprozessoren). Die Datenverwaltungseinrichtung 20 kann ihrerseits mit mehreren Mehrkernprozessoren gekoppelt sein.

## Patentansprüche

1. Avionik-Rechnersystem mit einer Datenverarbeitungsvorrichtung, mit
- mehreren Prozessoreinrichtungen (4) mit jeweils einem oder mehreren Prozessorkernen, auf denen mehrere Software-Anwendungen parallel ausführbar sind, und mit jeweils einem Hauptspeicher (21) mit Speicherbereichen (22, 23) zum Speichern von Daten, die den Software-Anwendungen zugeordnet sind;
- mehreren Schnittstelleneinrichtungen (5), an die jeweils externe Einrichtungen (E) anschließbar sind, wobei eine Zuordnung der physikalischen Schnittstelleneinrichtungen (5) zu den einzelnen Software-Anwendungen, die auf den Prozessorkernen ausgeführt werden, und den zugeordneten Speicherbereichen (22, 23) besteht; und mit
- Verbindungen (8, 10) zwischen den Schnittstelleneinrichtungen (5) und den Prozessoreinrichtungen (4), über die Daten zwischen den Schnittstelleneinrichtungen (5) und den Speicherbereichen (22, 23) der Prozessoreinrichtungen (4) transportierbar sind;
wobei
- in den Verbindungen (8, 10) wenigstens eine Datenverwaltungseinrichtung (20) zwischen den Schnittstelleneinrichtungen (5) und den Speicherbereichen (22, 23) der Prozessoreinrichtungen (4) vorgesehen ist, zum Handhaben von Datenflüssen zwischen den Schnittstelleneinrichtungen (5) und den Speicherbereichen (22, 23) zugeordneten Software-Anwendungen, die auf den Prozessoreinrichtungen (4) laufen;
- die Datenverwaltungseinrichtung ausgebildet ist, um Datenflüsse zu Speicherbereichen (22, 23) der Prozessoreinrichtungen (4) zu handhaben;
- die Speicherbereiche (22, 23) direkt von der Datenverwaltungseinrichtung (20) ansteuerbar sind, derart, dass die Datenverwaltungseinrichtung in für jeweilige Software-Anwendungen fest definierte physikalische Speicherbereiche Daten schreiben oder daraus Daten auslesen kann, wobei der Datentransfer zwischen einer Schnittstelleneinrichtung (5) und einem Speicherbereich (22, 23) ohne aktive Beteiligung der auf der Prozessoreinrichtung (4) laufenden Software-Anwendung erfolgt;
- die Datenverwaltungseinrichtung (20) als Hardwarekomponente ausgebildet ist;
- die Hardwarekomponente modular und/oder logisch getrennt von den Prozessoreinrichtungen (4) und der Schnittstelleneinrichtungen (5) ausgebildet ist;
- die Hardwarekomponente mit wenigstens einem Teil der Schnittstelleneinrichtungen (5) direkt verbunden ist.

2. Avionik-Rechnersystem nach Anspruch 1, wobei die Schnittstelleneinrichtungen (5) ausgebildet sind zum Empfangen von Daten von externen Einrichtungen (E), die an die Schnittstelleneinrichtungen anschließbar sind, und/oder zum Senden von Daten an externe Einrichtungen, die an die Schnittstelleneinrichtungen anschließbar sind.

3. Avionik-Rechnersystem nach Anspruch 1 oder 2, wobei wenigstens eine der Schnittstelleneinrichtungen (5) zum Empfangen von Daten von einer an die Schnittstelleneinrichtung anschließbaren externen Einrichtung (E) und wenigstens eine Schnittstelleneinrichtung zum Senden von Daten an eine an die Schnittstelleneinrichtung anschließbare externe Einrichtung ausgebildet ist.

4. Avionik-Rechnersystem nach einem der vorstehenden Ansprüche, wobei die externen Einrichtungen (E) Geräte, Sensoren, Motoren, Ventile, Schalter, Lichtelemente, Klimatisierungskomponenten sind, die in der Luftfahrt zum Einsatz kommen und die an zugeordnete Schnittstelleneinrichtungen (5) anschließbar sind.

## Claims

1. An avionics computer system comprising a data processing apparatus, comprising
- multiple processor devices (4), each having one or more processor cores on which multiple software applications can be executed in parallel, and each having a main memory (21) with memory areas (22, 23) for storing data associated with the software applications;
- multiple interface devices (5) to which external devices (E) can each be connected, wherein there is an assignment of the physical interface devices (5) to the individual software applications executed on the processor cores and to the assigned memory areas (22, 23); and comprising
- connections (8, 10) between the interface devices (5) and the processor devices (4), via which data can be transported between the interface devices (5) and the memory areas (22, 23) of the processor devices (4);
wherein
- at least one data management device (20) is provided in the connections (8, 10) between the interface devices (5) and the memory areas (22, 23) of the processor devices (4) for handling data flows between the interface devices (5) and software applications associated with the memory areas (22, 23) that run on the processor devices (4);
- the data management device is configured to handle data flows to memory areas (22, 23) of the processor devices (4);
- the memory areas (22, 23) are directly controllable by the data management device (20), such that the data management device can write data into or read data from physical memory areas that are firmly defined for relevant applications, wherein the data transfer between an interface device (5) and a memory area (22, 23) takes place without active involvement of the software application running on the processor device (4);
- the data management device (20) is configured as a hardware component;
- the hardware component is configured modularly and/or logically distinct from the processor devices (4) and the interface devices (5);
- the hardware component is directly connected to at least one part of the interface devices (5).

2. The avionics computer system according to claim 1, wherein the interface devices (5) are configured to receive data from external devices (E) that can be connected to the interface devices, and/or transmit data to external devices that can be connected to the interface devices.

3. The avionics computer system according to claim 1 or 2, wherein at least one of the interface devices (5) is configured to receive data from an external device (E) that can be connected to the interface device, and at least one interface device is configured to transmit data to an external device that can be connected to the interface device.

4. The avionics computer system according to any one of the preceding claims, wherein the external device (E) are units, sensors, motors, valves, switches, lighting elements, and air conditioning components that are used in aviation and can be connected to associated interface devices (5).

## Revendications

1. Système informatique d'avionique comprenant un dispositif de traitement de données, comprenant
- plusieurs équipements de processeur (4) comprenant chacun un ou plusieurs noyaux de processeur sur lesquels plusieurs applications logicielles peuvent être exécutées en parallèle, et comprenant chacun une mémoire principale (21) comprenant des zones de stockage (22, 23) pour stocker des données qui sont associées aux applications logicielles ;
- plusieurs équipements d'interface (5), auxquels peuvent être raccordés chacun des systèmes externes (E), dans lequel il existe une association des équipements d'interface (5) physiques aux diverses applications logicielles qui sont exécutées sur les noyaux de processeur et aux zones de stockage (22, 23) associées ; et comprenant
- des liaisons (8, 10) entre les équipements d'interface (5) et les équipements de processeur (4) qui permettent de transporter des données entre les équipements d'interface (5) et les zones de stockage (22, 23) des équipements de processeur (4) ; dans lequel
- il est prévu dans les liaisons (8, 10) au moins un équipement de gestion de données (20) entre les équipements d'interface (5) et les zones de stockage (22, 23) des équipements de processeur (4) pour gérer des flux de données entre les équipements d'interface (5) et des applications logicielles associées aux zones de stockage (22, 23) qui fonctionnent sur les équipements de processeur (4) ;
- l'équipement de gestion de données est formé pour manipuler des flux de données vers des zones de stockage (22, 23) des équipements de processeur (4) ;
- les zones de stockage (22, 23) peuvent être pilotées directement par l'équipement de gestion de données (20) de telle manière que l'équipement de gestion de données puisse écrire des données dans des zones de stockage physiques définies de manière fixe pour chacune des applications logicielles ou y lire des données, dans lequel le transfert de données entre un équipement d'interface (5) et une zone de stockage (22, 23) s'effectue sans participation active de l'application logicielle fonctionnant sur l'équipement de processeur (4) ;
- l'équipement de gestion de données (20) est conformé en un composant matériel ;
- le composant matériel est formé de manière modulaire et/ou de manière logiquement séparée des équipements de processeur (4) et des équipements d'interface (5) ;
- le composant matériel est directement relié à une partie au moins des équipements d'interface (5).

2. Système informatique d'avionique selon la revendication 1, dans lequel les équipements d'interface (5) sont formés pour recevoir des données d'équipements externes (E) qui peuvent être raccordés aux équipements d'interface, et/ou pour envoyer des données à des équipements externes qui peuvent être raccordés aux équipements d'interface.

3. Système informatique d'avionique selon la revendication 1 ou 2, dans lequel au moins un des équipements d'interface (5) est formé pour recevoir des données d'un équipement externe (E) pouvant être raccordé à l'équipement d'interface et au moins un équipement d'interface pour envoyer des données à un équipement externe pouvant être raccordé à l'équipement d'interface.

4. Système informatique d'avionique selon l'une des revendications précédentes, dans lequel les équipements externes (E) sont des appareils, des capteurs, des moteurs, des vannes, des commutateurs, des éléments d'éclairage, des composants de climatisation, qui sont utilisés dans l'aviation et qui peuvent être raccordés à des équipements d'interface (5) associés.
